(19) Europäisches Patentamt
European Patent Office
Office européen des brevets

(11) **EP 4 439 444 B1**

(12) **EUROPEAN PATENT SPECIFICATION**

(45) Date of publication and mention
of the grant of the patent:
**08.04.2026 Bulletin 2026/15**

(21) Application number: **23842293.5**

(22) Date of filing: **18.07.2023**

(51) International Patent Classification (IPC):
*G06T 3/40* (2024.01)    *G06T 7/11* (2017.01)
*G06V 10/764* (2022.01)    *G06N 3/045* (2023.01)
*G06N 3/0475* (2023.01)    *G06N 3/0495* (2023.01)
*G06N 3/0895* (2023.01)    *G06V 10/82* (2022.01)

(52) Cooperative Patent Classification (CPC):
**G06T 7/11; G06N 3/045; G06N 3/0475;
G06N 3/0495; G06N 3/0895; G06T 3/40;
G06V 10/764; G06V 10/82; Y02T 10/40**

(86) International application number:
**PCT/CN2023/107857**

(87) International publication number:
**WO 2024/017230 (25.01.2024 Gazette 2024/04)**

(54) **IMAGE PROCESSING METHOD AND APPARATUS, ELECTRONIC DEVICE, AND STORAGE MEDIUM**

BILDVERARBEITUNGSVERFAHREN UND -VORRICHTUNG, ELEKTRONISCHE VORRICHTUNG UND SPEICHERMEDIUM

PROCÉDÉ ET APPAREIL DE TRAITEMENT D'IMAGE, DISPOSITIF ÉLECTRONIQUE ET SUPPORT DE STOCKAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.07.2022 CN 202210873377**

(43) Date of publication of application:
**02.10.2024 Bulletin 2024/40**

(73) Proprietor: **Beijing Zitiao Network Technology
Co., Ltd.
Beijing 100190 (CN)**

(72) Inventors:
• **REN, Yuxi
Beijing 100028 (CN)**
• **WU, Jie
Beijing 100028 (CN)**
• **ZHANG, Peng
Beijing 100028 (CN)**
• **XIAO, Xuefeng
Beijing 100028 (CN)**

(74) Representative: **Marks & Clerk LLP
15 Fetter Lane
London EC4A 1BW (GB)**

(56) References cited:
EP-A1- 3 767 590    CN-A- 109 034 219
CN-A- 114 332 135    CN-A- 114 511 743
CN-A- 115 936 980

• YUXI REN ET AL: "Online Multi-Granularity Distillation for GAN Compression", ARXIV.ORG, CORNELL UNIVERSITY LIBRARY, 201 OLIN LIBRARY CORNELL UNIVERSITY ITHACA, NY 14853, 16 August 2021 (2021-08-16), XP091033827
• LIN WANG ET AL: "Knowledge Distillation and Student-Teacher Learning for Visual Intelligence: A Review and New Outlooks", ARXIV.ORG, CORNELL UNIVERSITY LIBRARY, 201 OLIN LIBRARY CORNELL UNIVERSITY ITHACA, NY 14853, 13 April 2020 (2020-04-13), XP081656626

**Description**

TECHNICAL FIELD

Embodiments of the present disclosure relate to the technical field of image processing, for example, to an image processing method and apparatus, an electronic device, and a storage medium.

D1 (YUXI REN ET AL: "Online Multi-Granularity Distillation for GAN Compression", ARXIV.ORG, CORNELL UNIVERSITY LIBRARY, 201 OLIN LIBRARY CORNELL UNIVERSITY ITHACA, NY 14853, 16 August 2021) disclosed online multi-granularity distillation for GAN compression. D1 disclosed the following contents. Generative Adversarial Networks (GANs) have witnessed prevailing success in yielding outstanding images, however, they are burdensome to deploy on resource constrained devices due to ponderous computational costs and hulking memory usage. Although recent efforts on compressing GANs have acquired remarkable results, they still exist potential model redundancies and can be further compressed. To solve this issue, we propose a novel online multi-granularity distillation (OMGD) scheme to obtain lightweight GANs, which contributes to generating high-fidelity images with low computational demands. We offer the first attempt to popularize single-stage online distillation for GAN-oriented compression, where the progressively promoted teacher generator helps to refine the discriminator-free based student generator. Complementary teacher generators and network layers provide comprehensive and multi-granularity concepts to enhance visual fidelity from diverse dimensions. Experimental results on four benchmark datasets demonstrate that OMGD successes to compress 40x MACs and 82.5× parameters on Pix2Pix and CycleGAN, without loss of image quality. It reveals that OMGD provides a feasible solution for the deployment of real-time image translation on resource-constrained devices. Our code and models are made public at: https://github.com/bytedance/OMGD.

BACKGROUND

Some image generators may generate images of one image domain based on images of another image domain. For example, high resolution images may be generated from low resolution images, etc. Their unique image generation capability has a wide range of application scenarios.

SUMMARY

The embodiments of the present disclosure provide an image processing method and apparatus, an electronic device, and a storage medium.

In a first aspect, the embodiments of the present disclosure provide a computer-implemented image processing method, which includes:

acquiring an original image to be processed;
inputting the original image into a first image processing model;
processing the original image by the first image processing model to generate a target image, in which the first image processing model and a second image processing model are obtained by online alternate training, supervision information during training process of the first image processing model includes at least part of images generated by the second image processing model during training process, and a model scale of the first image processing model is smaller than a model scale of the second image processing model; and
outputting the target image,
wherein the online alternate training comprises that the second image processing model is trained based on true-label data pairs acquired in a current round, and the first image processing model uses an image generated by the second image processing model after the current training round as the supervision information to imitate a training process of the second image processing model in the current training round for training; the true-label data pair is a data pair composed of a label sample and a true-label image, the label sample has a same image domain as that of the original image, and the true-label image has a same image domain as that of the target image;
the model scale of the first image processing model is smaller than the model scale of the second image processing model, which means that a total number of channels of the first image processing model is smaller than that of the second image processing model, and/or a total number of network layers of the first image processing model is smaller than that of the second image processing model;
the second image processing model is trained based on the true-label data pairs during the training process, and a pseudo-label image is generated according to an unlabeled sample; the supervision information comprises an image generated by the second image processing model based on labeled samples and at least part of pseudo-label images generated based on unlabeled samples;
the pseudo-label image is generated based on steps comprising:

acquiring an unlabeled sample as an input to the second image processing model during a process of the second image processing model and a discriminator performing adversarial training based on the true-label data pairs, wherein an unlabeled sample is acquired as an input of the second image processing model at an interval of training the second image processing model based on the true-label data pairs;

generating candidate pseudo-label images according to the unlabeled sample by the second image processing model; and

screening the candidate pseudo-label images by the discriminator to obtain a final pseudo-label image.

In a second aspect, the embodiments of the present disclosure further provide an electronic device, which includes:

one or more processors; and

a storage apparatus, configured to store one or more programs;

when the one or more programs are executed by the one or more processors, the one or more processors are caused to implement the image processing method according to any one of the embodiments of the present disclosure.

In a third aspect, the embodiments of the present disclosure further provide a storage medium including computer-executable instructions, and the computer-executable instructions, when executed by a computer processor, is configured to perform the image processing method according to any one of the embodiments of the present disclosure.

BRIEF DESCRIPTION OF DRAWINGS

Throughout the drawings, the same or similar reference numerals indicate the same or similar elements. It should be understood that the drawings are illustrative and the components and elements are not necessarily drawn to scale.

Fig. 1 is a schematic flow diagram of an image processing method provided by the embodiments of the present disclosure;

Fig. 2 is a schematic flow diagram of generating a pseudo-label image in an image processing method provided by the embodiments of the present disclosure;

Fig. 3 is a schematic diagram of a training framework for a second image processing model in an image processing method provided by the embodiments of the present disclosure;

Fig. 4 is a schematic diagram of a training framework in which a first image processing model uses a pseudo-label image as supervision information in an image processing method provided by the embodiments of the present disclosure;

Fig. 5 is a schematic diagram of a training framework in which a first image processing model uses a first image as supervision information in an image processing method provided by the embodiments of the present disclosure;

Fig. 6 is a schematic diagram of a general training framework of a first image processing model in an image processing method provided by the embodiments of the present disclosure;

Fig. 7 is a schematic structural diagram of an image processing apparatus provided by the embodiments of the present disclosure; and

Fig. 8 is a schematic structural diagram of an electronic device provided by the embodiments of the present disclosure.

DETAILED DESCRIPTION

The training of the image generator requires a large amount of high-quality paired data to guide the network to learn the mapping relationship between different image domains. However, creating paired images is extremely costly as they need to be edited one by one according to image editing instructions, which leads to high production cost of training data.

To cope with the above-mentioned situation, the embodiments of the present disclosure provide an image processing method and apparatus, an electronic device, and a storage medium.

The embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein. Rather, these embodiments are provided for a thorough and complete understanding of the present disclosure. It should be understood that the drawings and embodiments of the present disclosure are only for exemplary purposes and are not intended to limit the protection scope of the present disclosure.

It should be understood that the various steps described in the method embodiments of the present disclosure may be performed in different orders and/or in parallel. Furthermore, the method embodiments may include additional steps and/or omit performing the illustrated steps. The protection scope of the present disclosure is not limited in this aspect.

As used herein, the term "include," "comprise," and variations thereof are openended inclusions, i.e., "including but not limited to." The term "based on" is "based, at least in part, on." The term "an embodiment" represents "at least one embodiment," the term "another embodiment" represents "at least one additional embodiment," and the term "some embodiments" represents "at least some embodiments." Relevant definitions of other terms will be given in the description below.

It should be noted that concepts such as the "first," "second," or the like mentioned in the present disclosure are only used to distinguish different devices, modules or units, and are not used to limit the interdependence relationship or the order of functions performed by these devices, modules or units.

It should be noted that the modifications of "a," "an," "a plurality of," or the like mentioned in the present disclosure are illustrative rather than restrictive, and those skilled in the art should understand that unless the context clearly indicates otherwise, these modifications should be understood as "one or more."

It may be understood that the data involved in the embodiments of the present disclosure (including but not limited to the data itself, data acquisition or use) should comply with the requirements of corresponding laws, regulations and relevant provisions.

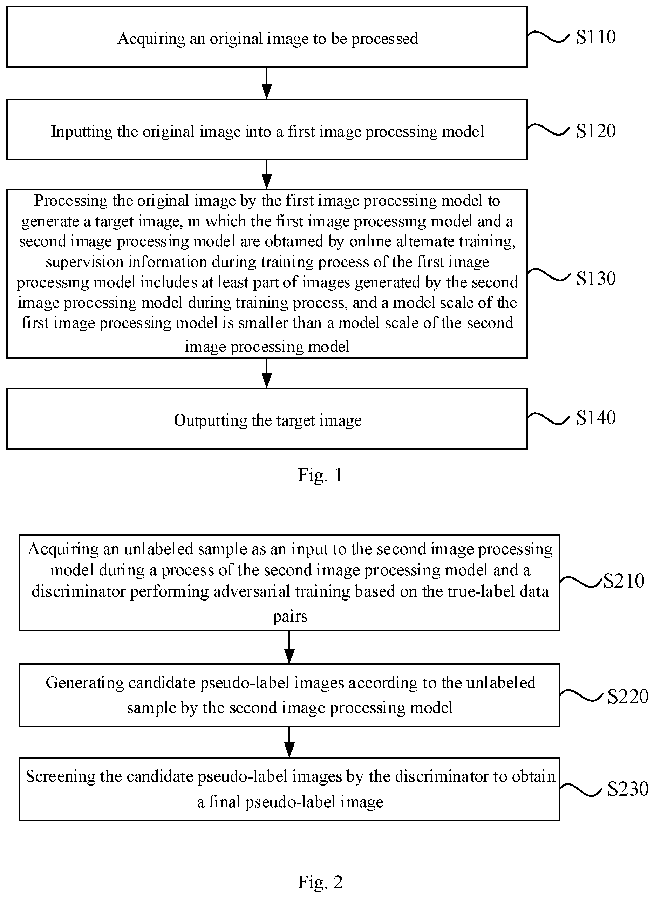

Fig. 1 is a schematic flow diagram of an image processing method provided by the embodiments of the present disclosure. The embodiments of the present disclosure may perform image processing based on a small-scale model after distilling the small-scale model by a large-scale model. The method may be performed by an image processing apparatus, which may be implemented in the form of software and/or hardware. The apparatus may be configurable in an electronic device, for example in a computer device.

As shown in Fig. 1, the image processing method provided by the present embodiment includes:

S110, acquiring an original image to be processed;
S120, inputting the original image into a first image processing model;
S130, processing the original image by the first image processing model to generate a target image, in which the first image processing model and a second image processing model are obtained by online alternate training, supervision information during training process of the first image processing model includes at least part of images generated by the second image processing model during training process, and a model scale of the first image processing model is smaller than a model scale of the second image processing model;
and S140, outputting the target image.

In the embodiments of the present disclosure, the image processing method may refer to a method of generating a target image of one image domain according to an original image of another image domain. The process of generating the target image according the original image may be performed by a first image processing model.

The first image processing model and the second image processing model may be generators in a Generative Adversarial Networks (GAN), or other generators capable of generating an image of one image domain from an image of another image domain. The model scale of the first image processing model is smaller than the model scale of the second image processing model, which may mean that the model width of the first image processing model (which may also be referred to as the number of channels of the model) is smaller than the model width of the second image processing model, and/or the model depth of the first image processing model (which may also be referred to as the number of network layers of the model) is smaller than the model depth of the second image processing model. It may be considered that the first image processing model is a simple model with a smaller scale, and the second image processing model is a complex model with a larger scale.

In the case of training based on the same true-label data pairs, the training effect of the larger-scale model is generally better than the training effect of the smaller-scale model. That is, when the training is based on the same true-label data pairs, the training effect of the second image processing model is better than the training effect of the first image processing model. By training the first image processing model with at least part of the images generated by the second image processing model as supervision information (i.e., performing model distillation on the first image processing model by the second image processing model), the performance of the first image processing model may be brought closer to the performance of the second image processing model.

The first image processing model may be optimized using only the second image processing model, that is, the supervision information of the first image processing model may all come from the second image processing model. The first image processing model is optimized using the image generated by the second image processing model based on labeled samples and at least part of pseudo-label images generated based on unlabeled samples as the supervision information. In this training mode, the second image processing model may be referred to as a teacher generator and the first image processing model as a student generator. By performing the model distillation, the model scale compression may be achieved, which facilitates the deployment of the first image processing model with small scale and good performance in devices with limited resources.

When the first image processing model is trained by using the generated image of the second image processing model as the supervision information after the training of the second image processing model is completed, the first image processing model is completely moved from zero to the second image processing model that is trained completely, and training the first image processing model to a level of performance comparable to the second image processing model will take a long time and a large amount of calculation.

In view of this, in the embodiments of the present disclosure, the first image processing model and the second image processing model are obtained by online alternate training. The online alternate training includes that the second image processing model is trained based on the true-label data pairs acquired in the current round; and the first image processing model uses the image generated by the second image processing model after the current training round as the supervision information, to imitate the training process of the second image processing model in the current training round for training. The true-label data pair is a data pair composed of a label sample and a true-label image, where the label sample has the same image domain as that of the original image, and the true-label image has the same image domain as that of the target image.

It may be considered that, during training process of the second image processing model, the first image processing model is distilled once for each iteration of the training, so that the first image processing model may progressively follow the training of the second image processing model. This gradual alternation of training makes it possible to accomplish model distillation from the second image processing model to the first image processing model with a small amount of computation. In the embodiments of the present disclosure, this progressively alternate training method may be referred to as online distillation. In practical applications, training the first image processing model by online distillation may reduce the model computation by 30% compared to distilling the first image processing model after the training of the second image processing model is completed.

In the embodiments of the present disclosure, the training process of the second image processing model may refer to the whole process of the second image processing model from the start of training to the completion of training. During training process of the second image processing model, in addition to being trained according to the true-label data pairs, the second image processing model also generates a pseudo-label image according to an unlabeled sample. Here, the image domain of the unlabeled sample is the same as the image domain of the original sample, and the image domain of the pseudo-labeled image is the same as the image domain of the target image. That is, the first image processing model may be independently trained based on at least part of the pseudo-label images, in addition to being trained following each iteration of the second image processing model. Thus, it is possible to enlarge the amount of training data of the first image processing model and improve the generalization of the first image processing model without paying the additional production cost of paired data.

Although the pseudo-label image may provide the supervision information for the first image processing model, it may not provide the supervision information for the second image processing model. That is, the first image processing model may be trained based on the pseudo-label image, but the second image processing model may not be trained based on the pseudo-label image. After the first image processing model is trained independently based on the pseudo-label image, the performance may deviate. Thus, independent training may be based on part of the better-quality pseudo-label images to reduce this performance deviation. However, if the training is based on all the pseudo-label images, because the pseudo-label images in the embodiments of the present disclosure are generated during training process of the second image processing model, the first image processing model will continue to follow the training of the second image processing model when the second image processing model generates the pseudo-label image and then is trained based on the true-label data pairs again. Therefore, the deviation caused by the pseudo label to the first image processing model may also be corrected in time, and the image generation quality of the first image processing model may also be ensured, to achieve the effect of reducing cost and increasing efficiency. The first image processing model thus obtained ensures excellent image processing performance while achieving lightweight.

In the embodiments of the present disclosure, the first image processing model is applied to a lightweight terminal device. The lightweight terminal device may be a terminal device with limited resources, for example, a terminal device such as a mobile phone. Due to the small model scale, the generalization of the model and the good quality of the generated images of the first image processing model with the training completed, it effectively reduces the deployment difficulty of the model on resource-constrained mobile terminal devices or other lightweight devices of the Internet of Things. The first image processing model, which has been trained, may generate high-quality target images based on the original image.

The embodiments of the present disclosure enable collaborative compression of model dimension and training data dimension during GAN training process as follows.

By alternately training the second image processing model and the first image processing model by online distillation, the first image processing model may be gradually guided to learn the optimization process of the second image processing model, so that the first image processing model may output images with quality similar to the second image processing model with less computation, and the model dimension compression is completed.

**EP 4 439 444 B1**

During training process of the second image processing model, a large number of unlabeled samples are introduced to generate pseudo-label images, and the first image processing model is trained based on at least part of the pseudo-label images, so that the traditional way of training based on the true-label data pairs may be transformed into the way of training based on the true-label data pairs in cooperation with the pseudo-label images, thereby completing the compression of requirements of the true-label data pairs, i.e., completing the compression of the dimension of training data. The pseudo-label images may bring additional supervision information for the training of the first image processing model, which is possible to enlarge the amount of training data of the first image processing model and improve the generalization of the first image processing model without paying the additional production cost of paired data. It is more conducive for the model to learn the structural features of the image domain of the image to be generated.

In the embodiments of the present disclosure, the first image processing model is a smaller-scale model and the second image processing model is a larger-scale model. In the case of training based on the same true-label data pairs, the training effect of the larger-scale model is generally better than the training effect of the smaller-scale model. The first image processing model and the second image processing model are trained alternately in an online way, and the first image processing model is trained by using the images generated in the training process of the second image processing model as the supervision information, so that the first image processing model may simulate each iteration of the training process of the second image processing model, and progressively follow the training. By progressively following the training, the model distillation from the second image processing model to the first image processing model may be achieved with a small amount of computation, bringing the performance of the first image processing model closer to the performance of the second image processing model.

The second image processing model may generate pseudo-label images based on the unlabeled samples in addition to training based on the true-label data pairs during training process. That is, in addition to following each iteration training process of the second image processing model, the first image processing model may also perform independent training based on at least part of the pseudo-label images, to enlarge the amount of training data of the first image processing model and improve the generalization of the first image processing model without paying the additional production cost of paired data.

Because the pseudo-label image can provide supervision information for the training of the first image processing model, but cannot provide supervision information for the training of second image processing model, the performance of the first image processing model may deviate after training based on the pseudo-label image. However, because the pseudo-label image is generated during the training of the second image processing model, the first image processing model will continue to follow the training of the second image processing model when the second image processing model generates the pseudo-label image and then is trained based on the true-label data pairs again. Therefore, the deviation introduced by the pseudo label to the first image processing model may be corrected in time to ensure the image generation quality of the first image processing model, and to achieve the effect of reducing cost and increasing efficiency.

The embodiments of the present disclosure may be combined with examples of the image processing methods provided in the above-mentioned embodiments. The second image processing model may be trained based on true-label data pairs during training process and generate a pseudo-label image based on an unlabeled sample. In the image processing method provided in the present embodiment, the generation process of the pseudo-label image is described. By utilizing the second image processing model trained on current true-label data to generate pseudo-label data based on unlabeled data, it is possible to provide additional supervision information for the training of the first image processing model.

Fig. 2 is a schematic flow diagram of generating a pseudo-label image in an image processing method provided by the embodiments of the present disclosure. As shown in Fig. 2, in the image processing method provided by the present embodiment, the pseudo-label image may be generated based on the following steps.

Step S210, acquiring an unlabeled sample as an input to the second image processing model during a process of the second image processing model and a discriminator performing adversarial training based on the true-label data pairs.

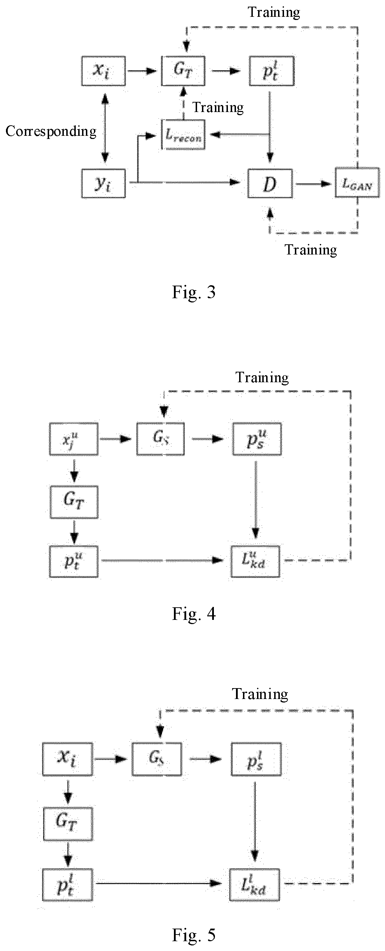

In an embodiment of the present disclosure, the second image processing model may be a generator in GAN, and may perform adversarial training together with the discriminator in GAN. Exemplarily, Fig. 3 is a schematic diagram of a training framework for a second image processing model in an image processing method provided by the embodiments of the present disclosure. Referring to Fig. 3, in some implementations, the second image processing model and the discriminator performing the adversarial training based on the true-label data pairs may includes:

acquiring a labeled sample $x_i$ among true-label data pairs $U_l = \{x_i, y_i\}_{i=1}^{N}$ as an input of a second image processing model $G_T$; generating a first image $p_t^l$ according to the labeled sample $x_i$ by the second image processing model $G_T$; acquiring a true-label image $y_i$ corresponding to the labeled sample $x_i$ among the true-label data pairs $U_l = \{x_i, y_i\}_{i=1}^{N}$; determining whether the first image $p_t^l$ and the true-label image $y_i$ are of the same type by the discriminator $D$; training the second image processing model with a goal of being determined as the same type by the

6

discriminator; and training the discriminator with a goal of being determined as different types by the discriminator.

i is a positive integer, and N represents the number of true-label data pairs.

The true-label data pairs $U_l = \{x_i, y_i\}_{i=1}^{N}$ are used to supervise the training of the second image processing model $G_T$. For example, the second image processing model $G_T$ and the discriminator $D$ may be trained with generation adversarial loss $L_{GAN}(G_T, D)$. The second image processing model $G_T$ is trained to map $x_i$ to $y_i$, and the discriminator $D$ is trained to distinguish the image $p_t$ generated by $G_T$ from the true-label image $y_i$. Here, the generation adversarial loss may be represented by the following formula:

$$L_{GAN}(G_T, D) = \mathbb{E}_{x,y}[\log D(x, y)] + \mathbb{E}_x[\log(1 - D(x, G_T(x)))];$$

where $x$ is each labeled sample; $y$ is each true-label image; $G_T(x)$ is each first image $p_t^l$ generated by the second image processing model according to each label sample; $\mathbb{E}_{x,y}[\ ]$ may represent an expectation function under the data $(x, y)$; and $\mathbb{E}_x[]$ may represent an expectation function under the data $x$.

Referring again to Fig. 3, the process of the second image processing model $G_T$ and the discriminator $D$ performing the adversarial training based on the true-label data pairs $U_l = \{x_i, y_i\}_{i=1}^{N}$ may further include: determining a reconstruction loss $L_{recon}$ according to the first image $p_t^l$ and the true-label image $y$; and training the second image processing model $G_T$ according to the reconstruction loss $L_{recon}$.

Here, the reconstruction loss $L_{recon}$ may be represented by the following formula:

$$L_{recon}(G_T, D) = \mathbb{E}_{\{x,y\}}[y - G_T(x)],$$

where the meaning of the same characters may be referred to above. By training the second image processing model based on the reconstruction loss, the output of the second image processing model may be made close to the true-label image.

In this case, the complete optimization loss function of the second image processing model $G_T$ may be represented by the following formula:

$$G_T = \arg\min_{G_T}\max_{D} L_{GAN}(G_T, D) + L_{recon}(G_T, D).$$

During the process of the second image processing model and the discriminator performing the adversarial training based on the true-label data pairs, acquiring an unlabeled sample as an input of the second image processing model may include, for example, acquiring an unlabeled sample as an input of the second image processing model, at the interval of the adversarial training based on the true-label data pairs. For example, acquiring the unlabeled sample may be randomly selecting an unlabeled sample from an unlabeled sample set. Here, the number of the unlabeled sample acquired at each time may be at least one. Because the acquisition of unlabeled samples occurs at the interval of the adversarial training, i.e., the second image processing model may continue the adversarial training after the generation of candidate pseudo-labels. That is, the first image processing model may continue to imitate the optimization process of the second image processing model after being trained based on the pseudo-label image, so that not only the generalization of the first image processing model may be improved, but also the possible deviation introduced by the pseudo-label image may be compensated to ensure the performance of the first image processing model.

In some implementations, it is also possible to acquire the unlabeled sample as an input of the second image processing model at intervals before performing the adversarial training based on the remaining proportion of true-label data pairs, after performing successive adversarial training based on a predetermined proportion (e.g., one-third, one-half, etc.) of true-label data pairs. By initially performing warm-up training based on a predetermined proportion of true-label data pairs, the pseudo-label image generated by the second image processing model may be more consistent with the structural features of the image domain of the image to be generated, which may provide better supervision information for the first image processing model to a certain extent.

In some implementations, during the process of the second image processing model and the discriminator performing the adversarial training based on the true-label data pairs, acquiring an unlabeled sample as an input of the second image processing model may include: acquiring the unlabeled sample as the input to the second image processing model, after the second image processing model and the discriminator performing adversarial training with a preset number of true-label data pairs being acquired every time.

In these implementations, acquiring the unlabeled sample at intervals of the adversarial training based on the true-label data pairs may be acquiring the unlabeled sample after performing adversarial training with a preset number of true-label data pairs (e.g., 1, 2, etc.) being acquired every time. Here, the preset number is inversely related to the degree of compression of the training data of the first image processing model. For example, if one unlabeled sample is acquired to generate candidate pseudo-label images after every acquisition of one true-label data pair for adversarial training, the required amount of 50% true-label data pairs may be compressed for the first image processing model in the case where the candidate pseudo-label images are all used for training the first image processing model; and if one unlabeled sample is acquired to generate candidate pseudo-labeled images after every two true-label data pairs are acquired for adversarial training, the required amount of 33% true-label data pairs may be compressed for the first image processing model in the case where the candidate pseudo-label images are all used for training the first image processing model. On the other hand, a reduced preset number may also introduce a slightly larger amount of computation for the training process of the first image processing model simulating the second image processing model. Therefore, the preset number may be set according to the actual situation to balance the compression amount of training data and the calculation amount of training of the first image processing model.

S220, generating candidate pseudo-label images according to the unlabeled sample by the second image processing model.

In this embodiment, the second image processing model may generate candidate pseudo-label images according to the unlabeled sample based on the current model parameters in the training. After generating the pseudo-label images according to the acquired unlabeled sample, the second image processing model may continue to perform adversarial training based on the true-label data pairs. The second image processing model continues to be optimized based on the supervision information provided by the true-label data pairs, so that the first image processing model continues to imitate the optimization process of the second image processing model.

S230, screening the candidate pseudo-label images by the discriminator to obtain a final pseudo-label image.

After the unlabeled samples $x_j^u$ acquired from an unlabeled sample set $U_u = \{x_j\}_{j=1}^M$ are input into the second image processing model $G_T$, a candidate pseudo-labeled image $p_t^u$ may be generated by the second image processing model $G_T$, i.e., $\mathrm{p_t^u = G_T(x_j^u)}$. Because the second image processing model $G_T$ has not acquired supervision information related to $x_j^u$, the quality of $p_t^u$ corresponding to different $x_j^u$ is uneven.

j is a positive integer and M represents the number of unlabeled samples.

Because there is a discriminator *D* against the second image processing model $G_T$ in the training process of the second image processing model $G_T$, the discriminator *D* can well judge the quality of the generated image of the current second image processing model $G_T$. For each candidate pseudo-label image $\mathrm{p_t^u}$, the quality of $\mathrm{p_t^u}$ is higher if the discriminator *D* considers the image to be close to a real image, and the quality of $\mathrm{p_t^u}$ is lower if the discriminator *D* discriminates that $\mathrm{p_t^u}$ is not a real image.

In this embodiment, a pseudo-label image with a higher image quality may be selected from a large number of candidate pseudo-labels by the discriminator to be sent into the first image processing model for training. Here, the screened high-quality pseudo-label image may be immediately input into the first image processing model for training, and may also be non-immediately input into the first image processing model for training. For example, it may be input once into the first image processing model for training after accumulating a certain number of pseudo-label images. The timing of inputting the pseudo-label image is not strictly limited here, and other ways of inputting the pseudo-label image into the first image processing model may be applied here, which is not exhaustive here.

In some implementations, screening the candidate pseudo-label images by the discriminator may include: performing authenticity evaluation on the candidate pseudo-label images by the discriminator to obtain an evaluation result; and screening the candidate pseudo-label images according to a preset evaluation criteria and the evaluation result.

Here, the authenticity evaluation is performed on the candidate pseudo-label image $p_t^u$ using the discriminator *D* to obtain an evaluation score $S_t^u$, where $S_t^u = D(x_j^u, G_T(x_j^u))$. The evaluation criteria may be a preset threshold value $\lambda_{thre}$. Screening the candidate pseudo-label images $p_t^u$ according to $\lambda_{thre}$ and $S_t^u$ may include taking the candidate pseudo-label image with $S_t^u$ being greater than $\lambda_{thre}$ as the pseudo-label image input to the first image processing model, and discarding and disusing the candidate pseudo-label image with $S_t^u$ being lower than $\lambda_{thre}$, so that the training data quantity of the first image processing model is enlarged while the quality of the training data is guaranteed.

In these implementations, in order to ensure the quality of the pseudo-label image, the discriminator may be used to perform data screening on the candidate pseudo-label images, and the selected high-quality pseudo-label image may improve the generalization of the student generator. This screening method helps to mine the structured features of unlabeled samples in the same style, and can be complementary with the true-label data pairs to train the first image processing model, thus reducing the expensive and time-consuming training data generation and selection steps, and reducing cost and increasing efficiency.

The embodiments of the present disclosure describe the generation process of the pseudo-label image. Providing additional supervision information for the training of the first image processing model may be achieved by generating the pseudo-label data based on the unlabeled data by using the second image processing model trained on the current true-label data. The image processing method provided by the embodiments of the present disclosure belongs to the same disclosed concept as the image processing method provided by the above-mentioned embodiments. The technical details that are not described in detail in the present embodiment may be referred to the above-mentioned embodiments, and the same technical features have the same advantageous effects in the present embodiment and the above-mentioned embodiments.

The embodiments of the present disclosure may be combined with examples of image processing methods provided by the above-mentioned embodiments. The image processing method provided by the present embodiment describes training steps of the first image processing model. During training process of the first image processing model, the training may be performed not only with the first image generated by the second image processing model according to the labeled samples as the supervision information, but also with at least part of the pseudo-labeled images generated by the second image processing model according to the unlabeled samples as the supervision information. The generalization of the first image processing model and the quality of the generated image may be improved by training the first image processing model with the labeled distillation loss for the first image and the unlabeled distillation loss for the pseudo-label image between the first image processing model and the second image processing model.

Exemplarily, Fig. 4 is a schematic diagram of a training framework in which a first image processing model uses a pseudo-label image as supervision information in an image processing method provided by the embodiments of the present disclosure. Referring to Fig. 4, in some implementations, when the first image processing model takes the pseudo-label image as the supervision information, the first image processing model is trained based on steps including:

acquiring an unlabeled sample $x_j^u$ corresponding to the pseudo-label image $p_t^u$ as an input of a first image processing model $G_S$; generating a second image $G_S$ according to the unlabeled sample $x_j^u$ by the first image processing model $G_S$;

determining a distillation loss (which may be referred to as an unlabeled distillation loss $L_{kd}^u$) according to the pseudo-label image $p_t^u$ and the second image $p_s^u$; and training the first image processing model according to the distillation loss $L_{kd}^u$.

Here, the reconstruction loss between the pseudo-label image $p_t^u$ and the second image $p_s^u$ may be taken as the distillation loss $L_{kd}^u$; and/or, in some implementations, determining the distillation loss according to the pseudo-label image $p_t^u$ and the second image $p_s^u$ may include: determining a perceptual loss $L_{preu}$ according to a feature image $\phi_j(p_t^u)$ during the process of generating the pseudo-label image $p_t^u$ by the second image processing model $G_T$ and a feature image $\phi_j(p_s^u)$ during the process of generating the second image $p_s^u$ by the first image processing model $G_S$; and taking the perceptual loss $L_{preu}$ as the distillation loss $L_{kd}^u$.

When the perceptual loss $L_{preu}$ is used to measure a difference between the pseudo-label image $p_t^u$ and the second image $p_s^u$, the perceptual loss $L_{preu}$ may include at least one of a feature reconstruction loss $L_{fea}$ and a style reconstruction loss $L_{style}$.

The feature reconstruction loss $L_{fea}$ may encourage $p_t^u$ and $p_s^u$ to have similar feature representations that may be obtained from $\phi$ metric of a pre-trained network, for example from $\phi$ metric of a Visual Geometry Group (VGG) network. The feature reconstruction loss $L_{fea}$ may be defined as follows:

$$L_{fea}(p_t^u, p_s^u) = \frac{1}{C_j H_j W_j} \parallel \phi_j(p_t^u) - \phi_j(p_s^u) \parallel_1,$$

where $\phi_j(x)$ represents an activation value (that is, a feature image) of $x$ at a $j^{th}$ layer of the VGG network; $\|\cdot\|_1$ represents a one-dimensional norm; and $C_j \times H_j \times W_j$ represents a dimension of $\phi_j(x)$.

$C_j$ represents the number of channel; $H_j$ represents the height; and $W_j$ represents the width.

The style reconstruction loss $L_{style}$ is introduced to penalize differences of $p_t^u$ and $p_s^u$ in style features, such as differences in color, texture, generic patterns, etc. Here, the style reconstruction loss $L_{style}$ may be defined as:

$$L_{style}(p_t^u, p_s^u) = \parallel G_j^\phi(p_t^u) - G_j^\phi(p_s^u) \parallel_1,$$

in the formula, $G_j^\phi(x)$ represents a feature after the activation value of $x$ in a $j^{th}$ layer of the VGG network is extracted by the Gram matrix.

It may be considered that the unlabeled distillation loss may include a reconstruction loss and/or a perceptual loss between the pseudo-label image and the second image. When the unlabeled distillation loss includes a reconstruction loss and a perceptual loss, the unlabeled distillation loss may be a sum or a weighted sum of the both, etc.

Further, in some implementations, the first image processing model $G_S$ is trained based on steps, which further include determining a total variation loss according to the second image $p_s^u$; accordingly, training the first image processing model according to the distillation loss $L_{kd}^u$ may include training the first image processing model $G_S$ according to the distillation loss $L_{kd}^u$ and the total variation loss $L_{tv}$.

Here, the spatial smoothness of the output image of the first image processing model $G_S$ may be improved by introducing the total variation loss $L_{tv}$. Three hyperparameters $\lambda_{fea}$, $\lambda_{style}$ and $\lambda_{tv}$ may be used to achieve a balance between the above losses, where the overall unlabeled distillation loss $L_{kd}^u(p_t^u, p_s^u)$ may be defined as follows:

$$L_{kd}^u(p_t^u, p_s^u) = \lambda_{fea} L_{fea} + \lambda_{style} L_{style} + \lambda_{tv} L_{tv};$$

where $\lambda_{fea}$, $\lambda_{style}$ and $\lambda_{tv}$ represent the weights of feature reconstruction loss $L_{fea}$, style reconstruction loss $L_{style}$ and total variation loss $L_{tv}$, respectively.

In some implementations, the images generated by the second image processing model $G_T$ during training process may further include a first image $p_t^l$ generated by the second image processing model $G_T$ according to a labeled sample $x_i$ among the true-label data pair $U_l = \{x_i, y_i\}_{i=1}^N$. Exemplarily, Fig. 5 is a schematic diagram of a training framework in which a first image processing model $G_S$ uses the first image $p_t^l$ as supervision information in an image processing method provided by an embodiment of the present disclosure. Referring to Fig. 5, when the first image processing model $G_S$ takes the first image $p_t^l$ as the supervision information, the first image processing model $G_S$ is trained based on the steps including:

acquiring a labeled sample $x_i$ corresponding to the first image $p_t^l$ as an input of the first image processing model $G_S$; generating a third image $p_s^l$ according to the labeled sample $x_i$ by the first image processing model; determining a distillation loss (which may be referred to as a labeled distillation loss $L_{kd}^l$) according to the first image $p_t^l$ and the third image $p_s^l$; and training the first image processing model $G_S$ according to the distillation loss $L_{kd}^l$.

Here, the calculation process of the labeled distillation loss $L_{kd}^l$ may refer to the calculation process of the unlabeled distillation loss $L_{kd}^u$. Here, the labeled distillation loss $L_{kd}^l$ may also include a reconstruction loss and/or a perceptual loss between the first image $p_t^l$ and the third image $p_s^l$. The perceptual loss may also include at least one of a feature reconstruction loss $L_{fea}$ and a style reconstruction loss $L_{style}$. Furthermore, the first image processing model $G_S$

may be trained according to the labeled distillation loss $L_{kd}^l$ and the total variation loss $L_{tv}$ of the third image $p_s^l$.

When the training process of the first image processing model $G_S$ includes both the labeled distillation loss $L_{kd}^l$ and the unlabeled distillation loss $L_{kd}^u$, the total distillation loss $L_{kd}$ of the first image processing model may be defined as:

$$L_{kd} = L_{kd}^l + \lambda_{unlabeled} \times L_{kd}^u,$$

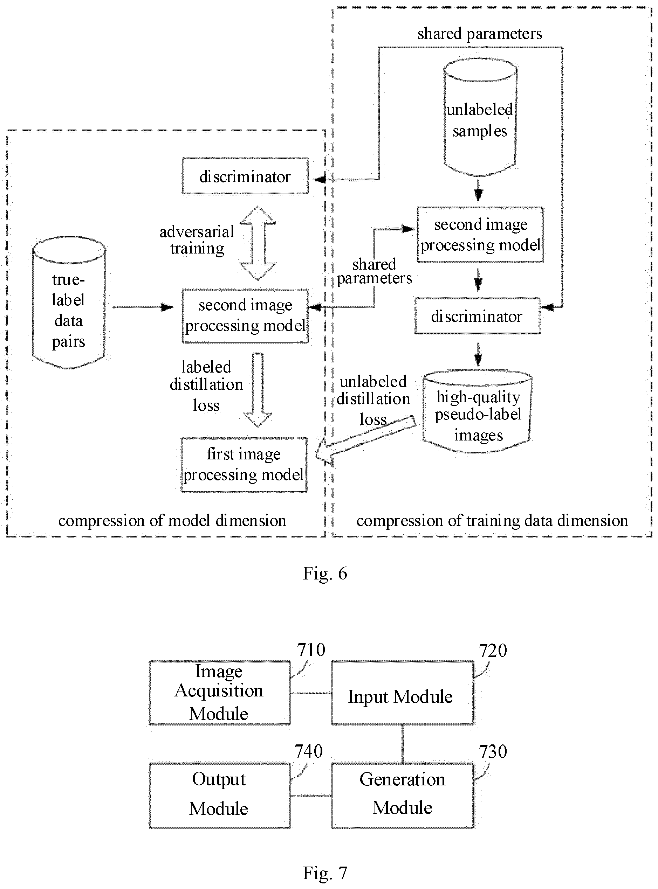

where, $\lambda_{unlabeled}$ represents a ratio of the contribution to the loss value of the labeled sample to the unlabeled sample.
Exemplarily, Fig. 6 is a schematic diagram of a general training framework of a first image processing model in an image processing method provided by the embodiments of the present disclosure. Referring to Fig. 6, during training process of the first image processing model, the cooperative compression of both the model dimension and the training data dimension is achieved.
Referring to Fig. 6, the second image processing model and the discriminator may perform adversarial training based on the true-label data pairs. Moreover, with each iteration and optimization of the second image processing model, the first image processing model may be guided through the labeled distillation loss to imitate the optimization process of the second image processing model, thereby realizing the online distillation of the first image processing model. The first image processing model may be referred to as a student generator and the second image processing model may be referred to as a teacher generator. Online distillation may achieve the compression of model dimension, which facilitates the deployment of the first image processing model with small scale and good performance in devices with limited resources.
The second image processing model may also acquire unlabeled samples to generate candidate pseudo-labeled images during the adversarial training process. Furthermore, the candidate pseudo-label images may be screened by the discriminator to obtain the high-quality pseudo-label images. The screened pseudo-label image may introduce the unlabeled distillation loss to the first image processing model to train the first image processing model. By generating the pseudo-label image, the amount of training data of the first image processing model may be enlarged without additional production cost of paired data, so that the dimension of training data may be compressed, and the generalization of the first image processing model may be improved.
In the embodiments of the present disclosure, the training steps of the first image processing model are described. During training process of the first image processing model, the training may be performed not only with the first image generated by the second image processing model according to the labeled samples as the supervision information, but also with the pseudo-labeled images generated by the second image processing model according to the unlabeled samples as the supervision information. The generalization of the first image processing model and the quality of the generated image may be improved by training the first image processing model with the labeled distillation loss for the first image and the unlabeled distillation loss for the pseudo-label image between the first image processing model and the second image processing model. The image processing method provided by the embodiments of the present disclosure belongs to the same disclosed concept as the image processing method provided by the above-mentioned embodiments. The technical details that are not described in detail in the present embodiment may be referred to the above-mentioned embodiments, and the same technical features have the same advantageous effects in the present embodiment and the above-mentioned embodiments.
Fig. 7 is a schematic structural diagram of an image processing apparatus provided by the embodiments of the present disclosure. The image processing apparatus provided by the present embodiment can perform image processing based on a small-scale model after distilling the small-scale model by a large-scale model.
As shown in Fig. 7, the image processing apparatus provided by the embodiments of the present disclosure may include:

an image acquisition module 710 configured to acquire an original image to be processed;
an input module 720 configured to input the original image into a first image processing model;
a generation module 730 configured to process the original image by the first image processing model to generate a target image, in which the first image processing model and a second image processing model are obtained by online alternate training, supervision information during training process of the first image processing model includes at least part of images generated by the second image processing model during training process, and a model scale of the first image processing model is smaller than a model scale of the second image processing model;
and an output module 740 configured to output the target image.

In some implementations, the second image processing model is trained based on true-label data pairs during training process, and a pseudo-label image is generated according to an unlabeled sample. Accordingly, the image processing apparatus may include a model training module, and the model training module may include a pseudo-label generation unit.

The pseudo-label generation unit may be configured to generate the pseudo-label image based on steps including:

acquiring an unlabeled sample as an input to the second image processing model during a process of the second image processing model and a discriminator performing adversarial training based on the true-label data pairs;
generating candidate pseudo-label images according to the unlabeled sample by the second image processing model;
and screening the candidate pseudo-label images by the discriminator to obtain a final pseudo-label image.

In some implementations, the pseudo-label generation unit may be configured to:
acquire the unlabeled sample as the input to the second image processing model, after the second image processing model and the discriminator performing adversarial training with a preset number of true-label data pairs being acquired every time.

In some implementations, the pseudo-label generation unit may be configured to:

perform authenticity evaluation on the candidate pseudo-label images by the discriminator to obtain an evaluation result;
and screen the candidate pseudo-label images according to a preset evaluation criteria and the evaluation result.

In some implementations, the model training module may include a second image processing model training unit.

The second image processing model training unit may be configured to perform adversarial training on the second image processing model and the discriminator based on the true-label data pairs.

The second image processing model training unit may be configured to:

acquire a labeled sample among the true-label data pairs as the input to the second image processing model;
generate a first image according to the labeled sample by the second image processing model;
acquire a true-label image corresponding to the labeled sample among the true-label data pairs;
determine whether the first image and the true-label image are of a same type by the discriminator;
train the second image processing model with a goal of being determined as the same type by the discriminator;
and train the discriminator with a goal of being determined as different types by the discriminator.

In some implementations, the second image processing model training unit may further be configured to:

determine a reconstruction loss according to the first image and the true-label image;
and train the second image processing model according to the reconstruction loss.

In some implementations, the model training module may include a first image processing model training unit.

If the first image processing model takes the pseudo-label image as the supervision information, the first image processing model training unit may be configured to train the first image processing model based on the steps including:

acquiring an unlabeled sample corresponding to the pseudo-label image as an input of the first image processing model;
generating a second image according to the unlabeled sample by the first image processing model;
determining a distillation loss according to the pseudo-label image and the second image;
and training the first image processing model according to the distillation loss.

In some implementations, the first image processing model training unit may be configured to:

determine a perceptual loss according to a feature image during a process of generating the pseudo-label image by the second image processing model and a feature image during a process of generating the second image by the first image processing model;
and take the perceptual loss as the distillation loss.

In some implementations, the perceptual loss includes at least one of a feature reconstruction loss and a style reconstruction loss.

In some implementations, the first image processing model training unit may further be configured to:

determine a total variation loss according to the second image;

accordingly, training the first image processing model according to the distillation loss includes training the first image processing model according to the distillation loss and the total variation loss.

In some implementations, the images generated by the second image processing model during training process further include:

a first image generated by the second image processing model according to a labeled sample among the true-label data pairs;

if the first image processing model takes the first image as the supervision information, the first image processing model training unit may be configured to train the first image processing model based on the steps including:

acquiring a labeled sample corresponding to the first image as an input of the first image processing model;
generating a third image according to the labeled sample by the first image processing model;
determining a distillation loss according to the first image and the third image;
and training the first image processing model according to the distillation loss.

The image processing apparatus provided by the embodiments of the present disclosure may execute the image processing method provided by any embodiment of the present disclosure, and has functional modules and advantageous effects corresponding to the execution method.

It should be noted that the respective units and modules included in the above-mentioned apparatus are divided only according to the functional logic, but are not limited to the above-mentioned division as long as the corresponding functions can be realized. In addition, the specific names of the functional units are merely for convenience of mutual distinction and are not intended to limit the protect scope of the embodiments of the present disclosure.

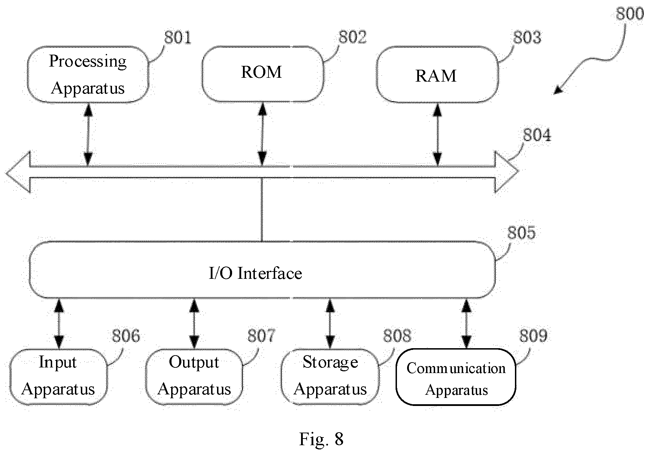

Referring to Fig. 8, Fig. 8 illustrates a schematic structural diagram of an electronic device 800 (for example, a terminal device or a server) suitable for implementing the embodiments of the present disclosure. The electronic devices in the embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), and fixed terminals such as a digital TV, a desktop computer, or the like. The electronic device illustrated in Fig. 8 is merely an example, and should not pose any limitation to the functions and the range of use of the embodiments of the present disclosure.

As illustrated in Fig. 8, the electronic device 800 may include a processing apparatus 801 (e.g., a central processing unit, a graphics processing unit, etc.), which can perform various suitable actions and processing according to a program stored in a read-only memory (ROM) 802 or a program loaded from a storage apparatus 808 into a random-access memory (RAM) 803. The RAM 803 further stores various programs and data required for operations of the electronic device 800. The processing apparatus 801, the ROM 802, and the RAM 803 are interconnected through a bus 804. An input/output (I/O) interface 805 is also connected to the bus 804.

Usually, the following apparatuses may be connected to the I/O interface 805: an input apparatus 806 including, for example, a touch screen, a touch pad, a keyboard, a mouse, a camera, a microphone, an accelerometer, a gyroscope, or the like; an output apparatus 807 including, for example, a liquid crystal display (LCD), a loudspeaker, a vibrator, or the like; a storage apparatus 808 including, for example, a magnetic tape, a hard disk, or the like; and a communication apparatus 809. The communication apparatus 809 may allow the electronic device 800 to be in wireless or wired communication with other devices to exchange data. While Fig. 8 illustrates the electronic device 800 having various apparatuses, it should be understood that not all of the illustrated apparatuses are necessarily implemented or included. More or fewer apparatuses may be implemented or included alternatively.

Particularly, according to the embodiments of the present disclosure, the processes described above with reference to the flowcharts may be implemented as a computer software program. For example, the embodiments of the present disclosure include a computer program product, which includes a computer program carried by a non-transitory computer-readable medium. The computer program includes program code for performing the methods shown in the flowcharts. In such embodiments, the computer program may be downloaded online through the communication apparatus 809 and installed, or may be installed from the storage apparatus 808, or may be installed from the ROM 802. When the computer program is executed by the processing apparatus 801, the above-mentioned functions defined in the methods of some embodiments of the present disclosure are performed.

The electronic device provided by the embodiments of the present disclosure belongs to the same disclosed concept as the image processing method provided by the above-mentioned embodiments. The technical details that are not described in detail in the present embodiment may be referred to the above-mentioned embodiments, and the present embodiment has the same advantageous effects as the above-mentioned embodiments.

The embodiments of the present disclosure further provide a computer storage medium, on which a computer program is stored, and the computer program, when executed by a processor, implements the image processing method provided by the above-mentioned embodiments.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program code. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementations, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to:

acquire an original image to be processed; input the original image into a first image processing model; process the original image by the first image processing model to generate a target image, in which the first image processing model and a second image processing model are obtained by online alternate training, supervision information during training process of the first image processing model includes at least part of images generated by the second image processing model during training process, and a model scale of the first image processing model is smaller than a model scale of the second image processing model; and output the target image.

The storage medium may be a non-transitory storage medium.

The computer program code for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, function, and operation of possible implementations of systems, methods, and computer program products according to various embodiments of the present disclosure. In this regard, each block in the flowcharts or block diagrams may represent a module, a program segment, or a portion of code, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

Additionally, although operations are depicted in a particular order, it should not be understood that these operations are required to be performed in a specific order as illustrated or in a sequential order. Under certain circumstances, multitasking and parallel processing may be advantageous. Certain features that are described in the context of separate embodiments may also be implemented in combination in a single embodiment. Conversely, various features that are described in the context of a single embodiment may also be implemented in multiple embodiments separately or in any suitable subcombinations.

**Claims**

1. A computer-implemented image processing method, comprising:

   acquiring (S110) an original image to be processed;
   inputting (S120) the original image into a first image processing model;
   processing (S130) the original image by the first image processing model to generate a target image, wherein the first image processing model and a second image processing model are obtained by online alternate training, supervision information during training process of the first image processing model comprises at least part of images generated by the second image processing model during training process, and a model scale of the first image processing model is smaller than a model scale of the second image processing model; and
   outputting (S140) the target image,
   wherein the online alternate training comprises that the second image processing model is trained based on true-label data pairs acquired in a current round, and the first image processing model uses an image generated by the second image processing model after the current training round as the supervision information to imitate a training process of the second image processing model in the current training round for training; the true-label data pair is a data pair composed of a label sample and a true-label image, the label sample has a same image domain as that of the original image, and the true-label image has a same image domain as that of the target image;
   the model scale of the first image processing model is smaller than the model scale of the second image processing model, which means that a total number of channels of the first image processing model is smaller than that of the second image processing model, and/or a total number of network layers of the first image processing model is smaller than that of the second image processing model;
   **characterized in that**,
   the second image processing model is trained based on the true-label data pairs during the training process, and a pseudo-label image is generated according to an unlabeled sample; the supervision information comprises an image generated by the second image processing model based on labeled samples and at least part of pseudo-label images generated based on unlabeled samples;
   the pseudo-label image is generated based on steps comprising:

   acquiring (S210) an unlabeled sample as an input to the second image processing model during a process of the second image processing model and a discriminator performing adversarial training based on the true-label data pairs, wherein an unlabeled sample is acquired as an input of the second image processing model at an interval of training the second image processing model based on the true-label data pairs;
   generating (S220) candidate pseudo-label images according to the unlabeled sample by the second image processing model; and
   screening (S230) the candidate pseudo-label images by the discriminator to obtain a final pseudo-label image.

2. The method according to claim 1, wherein the acquiring the unlabeled sample as the input to the second image processing model during the process of the second image processing model and the discriminator performing the adversarial training based on the true-label data pairs, comprises:
acquiring the unlabeled sample as the input to the second image processing model, after the second image processing model and the discriminator performing adversarial training with a preset number of true-label data pairs being acquired every time.

3. The method according to claim 1, wherein the screening the candidate pseudo-label images by the discriminator comprises:

performing authenticity evaluation on the candidate pseudo-label images by the discriminator to obtain an evaluation result; and
screening the candidate pseudo-label images according to a preset evaluation criteria and the evaluation result.

4. The method according to claim 1, wherein the second image processing model and the discriminator performing the adversarial training based on the true-label data pairs comprises:

acquiring a labeled sample among the true-label data pairs as the input to the second image processing model;
generating a first image according to the labeled sample by the second image processing model;
acquiring a true-label image corresponding to the labeled sample among the true-label data pairs;
determining whether the first image and the true-label image are of a same type by the discriminator;
training the second image processing model with a goal of being determined as the same type by the discriminator; and
training the discriminator with a goal of being determined as different types by the discriminator.

5. The method according to claim 4, wherein during the process of the second image processing model and the discriminator performing the adversarial training based on the true-label data pairs, the method further comprises:

determining a reconstruction loss according to the first image and the true-label image; and
training the second image processing model according to the reconstruction loss.

6. The method according to claim 1, wherein if the first image processing model takes the pseudo-label image as the supervision information, the first image processing model is trained based on steps comprising:

acquiring an unlabeled sample corresponding to the pseudo-label image as an input of the first image processing model;
generating a second image according to the unlabeled sample by the first image processing model;
determining a distillation loss according to the pseudo-label image and the second image; and
training the first image processing model according to the distillation loss.

7. The method according to claim 6, wherein the determining the distillation loss according to the pseudo-label image and the second image comprises:

determining a perceptual loss according to a feature image during a process of generating the pseudo-label image by the second image processing model and a feature image during a process of generating the second image by the first image processing model; and
taking the perceptual loss as the distillation loss.

8. The method according to claim 7, wherein the perceptual loss comprises at least one of a feature reconstruction loss and a style reconstruction loss.

9. The method according to claim 6, wherein the first image processing model is trained based on steps, which further comprises:

determining a total variation loss according to the second image; and
the training the first image processing model according to the distillation loss comprises training the first image processing model according to the distillation loss and the total variation loss.

10. The method according to claim 1, wherein the images generated by the second image processing model during training process further comprise a first image generated by the second image processing model according to a labeled sample among true-label data pairs; and
if the first image processing model takes the first image as the supervision information, the first image processing model is trained based on steps comprising:

acquiring a labeled sample corresponding to the first image as an input of the first image processing model;
generating a third image according to the labeled sample by the first image processing model;
determining a distillation loss according to the first image and the third image; and
training the first image processing model according to the distillation loss.

11. The method according to claim 1, wherein the first image processing model is applied to a lightweight terminal device.

12. An electronic device (800), comprising:

one or more processors; and
a storage apparatus (808), configured to store one or more programs,
**characterized in that** when the one or more programs are executed by the one or more processors, the one or more processors are caused to implement the image processing method according to any one of claims 1-11.

13. A storage medium, comprising computer-executable instructions, **characterized in that** the computer-executable instructions, when executed by a computer processor, causes the computer processor to perform the image processing method according to any one of claims 1-11.

**Patentansprüche**

1. Computerimplementiertes Bildverarbeitungsverfahren, umfassend:

Erfassen (S110) eines Originalbildes zur Weiterverarbeitung;
Eingeben (S120) des Originalbildes in ein erstes Bildverarbeitungsmodell;
Verarbeiten (S130) des Originalbildes durch das erste Bildverarbeitungsmodell zur Erzeugung eines Zielbildes, wobei das erste Bildverarbeitungsmodell und ein zweites Bildverarbeitungsmodell durch alternierendes Online-Training erhalten werden, wobei die Überwachungsinformationen während des Trainingsprozesses des ersten Bildverarbeitungsmodells mindestens einen Teil der vom zweiten Bildverarbeitungsmodell während des Trainingsprozesses erzeugten Bilder umfassen und ein Modellmaßstab des ersten Bildverarbeitungsmodells kleiner ist als einer Modellmaßstab des zweiten Bildverarbeitungsmodells; und
Ausgeben (S140) des Zielbildes,
wobei das alternierende Online-Training darin besteht, dass das zweite Bildverarbeitungsmodell auf der Grundlage von True-Label-Datenpaaren trainiert wird, die in einer aktuellen Runde erfasst wurden, und das erste Bildverarbeitungsmodell ein vom zweiten Bildverarbeitungsmodell nach der aktuellen Trainingsrunde generiertes Bild als Überwachungsinformation verwendet, um einen Trainingsprozess des zweiten Bildverarbeitungsmodells in der aktuellen Trainingsrunde für Training zu imitieren; wobei das True-Label-Datenpaar ein Datenpaar ist, das aus einer Label-Probe und einem True-Label-Bild besteht, wobei die Label-Probe eine gleiche Bilddomäne wie das Originalbild aufweist und das True-Label-Bild eine gleiche Bilddomäne wie das Zielbild aufweist; der Modellmaßstab des ersten Bildverarbeitungsmodells kleiner als der Modellmaßstab des zweiten Bildverarbeitungsmodells ist, was bedeutet, dass eine Gesamtzahl der Kanäle des ersten Bildverarbeitungsmodells kleiner ist als die des zweiten Bildverarbeitungsmodells und/oder eine Gesamtzahl der Netzwerkschichten des ersten Bildverarbeitungsmodells kleiner ist als die des zweiten Bildverarbeitungsmodells;
**dadurch gekennzeichnet, dass**
das zweite Bildverarbeitungsmodell während des Trainingsprozesses auf der Grundlage der True-Label-Datenpaare trainiert wird, und gemäß eines ungelabelten Probe ein Pseudo-Label-Bild generiert wird; wobei die Überwachungsinformationen ein Bild umfassen, das vom zweiten Bildverarbeitungsmodell auf der Grundlage gelabelter Proben generiert wurde, und mindestens einen Teil der Pseudo-Label-Bilder, die auf der Grundlage ungelabelter Proben generiert wurden;
das Pseudo-Label-Bild auf der Grundlage folgender Schritte generiert wird, umfassend:

Erfassen (S210) einer ungelabelten Probe als Eingabe für das zweite Bildverarbeitungsmodell während eines Prozesses, bei dem das zweite Bildverarbeitungsmodell und ein Diskriminator adversariales Training auf der Grundlage der True-Label-Datenpaare durchführen, wobei eine ungelabelte Probe als Eingabe für das zweite Bildverarbeitungsmodell in einem Intervall des Trainings des zweiten Bildverarbeitungsmodells auf der Grundlage der True-Label-Datenpaare erfasst wird;
Generieren (S220) von Kandidaten-Pseudolabel-Bildern gemäß der ungelabelten Probe durch das zweite Bildverarbeitungsmodell; und
Screening (S230) der Kandidaten-Pseudo-Label-Bilder durch den Diskriminator, um ein endgültiges Pseudo-Label-Bild zu erhalten.

2. Verfahren nach Anspruch 1, wobei das Erfassen der ungelabelten Probe als Eingabe für das zweite Bildverarbeitungsmodell während des Prozesses des zweiten Bildverarbeitungsmodells und des Diskriminators, der das adversariale Training auf der Grundlage der True-Label-Datenpaare durchführt, Folgendes umfasst:
Erfassen der ungelabelten Probe als Eingabe für das zweite Bildverarbeitungsmodell, nachdem das zweite Bildverarbeitungsmodell und der Diskriminator adversariales Training mit einer voreingestellten Anzahl von True-Label-Datenpaaren, die jedes Mal erfassen werden, durchgeführt haben.

3. Verfahren nach Anspruch 1, wobei das Screening der Kandidaten-Pseudo-Label-Bilder durch den Diskriminator Folgendes umfasst:

   Durchführen einer Authentizitätsbewertung der Kandidaten-Pseudolabel-Bilder durch den Diskriminator, um ein Bewertungsergebnis zu erhalten; und
   Screenen der Kandidaten-Pseudo-Label-Bilder gemäß einem vordefinierten Bewertungskriterium und dem Bewertungsergebnis.

4. Verfahren nach Anspruch 1, wobei das zweite Bildverarbeitungsmodell und der Diskriminator, der das adversariale Training auf der Grundlage der True-Label-Datenpaare durchführt, Folgendes umfassen:

   Auswählen einer gelabelten Probe unter den True-Label-Datenpaaren als Eingabe für das zweite Bildverarbeitungsmodell;
   Erzeugen eines ersten Bildes gemäß der gelabelten Probe durch das zweite Bildverarbeitungsmodell;
   Erfassen eines True-Label-Bildes, das der gelabelten Probe unter den True-Label-Datenpaaren entspricht;
   Bestimmen, durch den Diskriminator, ob das erste Bild und das True-Label-Bild vom gleichen Typ sind;
   Trainieren des zweiten Bildverarbeitungsmodells mit dem Ziel, vom Diskriminator als vom gleichen Typ bestimmt zu werden; und
   Trainieren des Diskriminators mit dem Ziel, vom Diskriminator als verschiedene Typen bestimmt zu werden.

5. Verfahren nach Anspruch 4, wobei das Verfahren während des Prozesses des zweiten Bildverarbeitungsmodells und des Diskriminators, der das adversariale Training auf der Grundlage der True-Label-Datenpaare durchführt, ferner Folgendes umfasst:

   Bestimmen eines Rekonstruktionsverlusts gemäß dem ersten Bild und dem True-Label-Bild; und
   Trainieren des zweiten Bildverarbeitungsmodells gemäß dem Rekonstruktionsverlust.

6. Verfahren nach Anspruch 1, wobei das erste Bildverarbeitungsmodell, falls es das Pseudo-Label-Bild als Überwachungsinformation verwendet, auf der Grundlage von Schritten trainiert wird, umfassend:

   Erfassen einer ungelabelten Probe, die dem Pseudo-Label-Bild entspricht, als Eingabe des ersten Bildverarbeitungsmodells;
   Erzeugen eines zweiten Bildes gemäß der ungelabelten Probe durch das erste Bildverarbeitungsmodell;
   Bestimmen eines Destillationsverlusts gemäß dem Pseudo-Label-Bild und dem zweiten Bild; und
   Trainieren des ersten Bildverarbeitungsmodells gemäß dem Destillationsverlust.

7. Verfahren nach Anspruch 6, wobei das Bestimmen des Destillationsverlustes gemäß dem Pseudo-Label-Bild und dem zweiten Bild Folgendes umfasst:

   Bestimmen eines Wahrnehmungsverlustes gemäß einem Merkmalsbild während ein Generierungsprozess des Pseudo-Label-Bildes durch das zweite Bildverarbeitungsmodell und eines Merkmalsbildes während einem Generierungsprozess des zweiten Bildes durch das erste Bildverarbeitungsmodell; und
Annehmen des Wahrnehmungsverlusts als Destillationsverlust.

8. Verfahren nach Anspruch 7, wobei der Wahrnehmungsverlust mindestens einen Merkmalsrekonstruktionsverlust und/oder einen Stilrekonstruktionsverlust umfasst.

9. Verfahren nach Anspruch 6, wobei das erste Bildverarbeitungsmodell auf der Grundlage von Schritten trainiert wird, das ferner umfasst:

Bestimmen eines Gesamtvariationsverlustes gemäß dem zweiten Bild; und
Trainieren des ersten Bildverarbeitungsmodells gemäß dem Destillationsverlust Trainieren des ersten Bildverarbeitungsmodells gemäß dem Destillationsverlust und dem Totalvariationsverlust umfasst.

10. Verfahren nach Anspruch 1, wobei die vom zweiten Bildverarbeitungsmodell während des Trainingsprozesses erzeugten Bilder ferner ein erstes Bild umfassen, das vom zweiten Bildverarbeitungsmodell gemäß einer gelabelten Probe unter True-Label-Datenpaaren erzeugt wurde; und
wenn das erste Bildverarbeitungsmodell das erste Bild als Überwachungsinformation verwendet, wird das erste Bildverarbeitungsmodell auf der Grundlage von Schritten trainiert wird, umfassend:

Erfassen einer gelabelten Probe, die dem Pseudo-Label-Bild entspricht, als Eingabe des ersten Bildverarbeitungsmodells;
Erzeugen eines dritten Bildes gemäß der gelabelten Probe durch das zweite Bildverarbeitungsmodell;
Bestimmen eines Destillationsverlustes gemäß dem ersten und dem dritten Bild; und
Trainieren des ersten Bildverarbeitungsmodells gemäß dem Destillationsverlust.

11. Verfahren nach Anspruch 1, wobei das erste Bildverarbeitungsmodell auf ein leichtes Endgerät angewendet wird.

12. Elektronische Vorrichtung (800), umfassend:

einen oder mehrere Prozessoren; und
eine Speichereinrichtung (808), die konfiguriert ist, um ein oder mehrere Programme zu speichern, **dadurch gekennzeichnet, dass**, wenn das eine oder die mehreren Programme von dem einen oder den mehreren Prozessoren ausgeführt werden, der eine oder die mehreren Prozessoren veranlasst werden, das Bildverarbeitungsverfahren nach einem der Ansprüche 1-11 zu implementieren.

13. Speichermedium, umfassend computerausführbare Anweisungen, **dadurch gekennzeichnet, dass**, wenn die computerausführbaren Anweisungen von einem Computerprozessor ausgeführt werden, diese den Computerprozessor veranlassen, das Bildverarbeitungsverfahren nach einem der Ansprüche 1-11 auszuführen.

**Revendications**

1. Procédé de traitement d'image mis en œuvre par ordinateur, comprenant :

l'acquisition (S110) d'une image d'origine à traiter;
l'entrée (S120) de l'image d'origine dans un premier modèle de traitement d'image ;
le traitement (S130) de l'image d'origine par l'intermédiaire du premier modèle de traitement d'image pour générer une image cible, dans lequel le premier modèle de traitement d'image et un second modèle de traitement d'image sont obtenus par entraînement alterné en ligne, des informations de supervision pendant le processus d'entraînement du premier modèle de traitement d'image comprennent au moins une partie d'images générées par le second modèle de traitement d'image pendant le processus d'entraînement, et une échelle de modèle du premier modèle de traitement d'image est inférieure à une échelle de modèle du second modèle de traitement d'image ; et
la délivrance en sortie (S140) de l'image cible,
dans lequel l'entraînement alterné en ligne comprend que le second modèle de traitement d'image est entraîné sur la base de paires de données d'étiquette réelle acquises lors d'un cycle d'entraînement actuel, et que le premier modèle de traitement d'image utilise une image générée par le second modèle de traitement d'image après le cycle d'entraînement actuel comme informations de supervision pour imiter un processus d'entraînement du second modèle de traitement d'image lors du cycle d'entraînement actuel ; la paire de données d'étiquette réelle est une paire de données composée d'un échantillon d'étiquette et d'une image d'étiquette réelle, l'échantillon d'étiquette présentant un même domaine d'image que celui de l'image d'origine, et l'image d'étiquette réelle présentant un même domaine d'image que celui de l'image cible;

l'échelle de modèle du premier modèle de traitement d'image est inférieure à l'échelle de modèle du second modèle de traitement d'image, ce qui signifie qu'un nombre total de canaux du premier modèle de traitement d'image est inférieur à celui du second modèle de traitement d'image et/ou que le nombre total de couches de réseau du premier modèle de traitement d'image est inférieur à celui du second modèle de traitement d'image ; **caractérisé en ce que**

le second modèle de traitement d'image est entraîné sur la base des paires de données d'étiquette réelle au cours du processus d'entraînement, et une image pseudo-étiquetée est générée en fonction d'un échantillon non étiqueté ; les informations de supervision comprennent une image générée par le second modèle de traitement d'image sur la base d'échantillons étiquetés et au moins une partie de pseudo-images d'étiquette générées sur la base d'échantillons non étiquetés ;

la pseudo- image d'étiquette est générée sur la base d'étapes comprenant :

l'acquisition (S210) d'un échantillon non étiqueté en tant qu'entrée du second modèle de traitement d'image au cours d'un processus du second modèle de traitement d'image et d'un discriminateur effectuant un entraînement adverse basé sur les paires de données d'étiquette réelle, dans lequel un échantillon non étiqueté est acquis en tant qu'entrée du second modèle de traitement d'image à un intervalle d'entraînement du second modèle de traitement d'image basé sur les paires de données d'étiquette réelle ;

la génération des pseudo-images étiquetées candidates (S220) selon l'échantillon non étiqueté par l'intermédiaire du second modèle de traitement d'image ; et

le criblage (S230) des pseudo-images étiquetées candidates par le discriminateur pour obtenir une pseudo-image étiquetée finale.

2. Procédé selon la revendication 1, dans lequel l'acquisition de l'échantillon non étiqueté en tant qu'entrée du second modèle de traitement d'image pendant le processus du second modèle de traitement d'image et du discriminateur effectuant l'entraînement adverse sur la base des paires de données d'étiquette réelle, comprend :

l'acquisition de l'échantillon non étiqueté en tant qu'entrée du second modèle de traitement d'image, après que le second modèle de traitement d'image et le discriminateur aient effectué un entraînement adverse avec un nombre prédéfini de paires de données d'étiquette réelle acquises à chaque fois.

3. Procédé selon la revendication 1, dans lequel le criblage des pseudo-images d'étiquette candidates par le discriminateur comprend :

la réalisation d'une évaluation d'authenticité sur les pseudo-images étiquetées candidates par l'intermédiaire du discriminateur afin d'obtenir un résultat d'évaluation ; et

le criblage des pseudo-images d'étiquette candidates selon des critères d'évaluation prédéfinis et le résultat d'évaluation.

4. Procédé selon la revendication 1, dans lequel le second modèle de traitement d'image et le discriminateur effectuant l'apprentissage adverse sur la base des paires de données d'étiquette réelle comprend :

l'acquisition d'un échantillon étiqueté parmi les paires de données d'étiquette réelle en tant qu'entrée du second modèle de traitement d'image ;

la génération d'une première image selon l'échantillon étiqueté par le second modèle de traitement d'image ;

l'acquisition d'une image d'étiquette réelle correspondant à l'échantillon étiqueté parmi les paires de données d'étiquettes réelles ;

la détermination si la première image et l'image d'étiquette réelle sont du même type par l'intermédiaire du discriminateur ;

l'entraînement du second modèle de traitement d'image dans le but d'être déterminé comme étant du même type par le discriminateur ; et

l'entraînement du discriminateur dans le but d'être déterminé comme appartenant à des types différents par le discriminateur.

5. Procédé selon la revendication 4, dans lequel, pendant le processus du second modèle de traitement d'image et du discriminateur effectuant l'apprentissage adverse sur la base de paires de données d'étiquette réelle, le procédé comprend en outre :

la détermination d'une perte de reconstruction en fonction de la première image et de l'image d'étiquette réelle ; et l'entraînement du second modèle de traitement d'image en fonction de la perte de reconstruction.

6. Procédé selon la revendication 1, dans lequel si le premier modèle de traitement d'image prend la pseudo-image d'étiquette comme informations de supervision, le premier modèle de traitement d'image est entraîné sur la base des étapes comprenant :

l'acquisition d'un échantillon non étiqueté correspondant à l'image pseudo-étiquetée en tant qu'entrée du premier modèle de traitement d'image ; la génération d'une deuxième image selon l'échantillon non étiqueté par l'intermédiaire du premier modèle de traitement d'image ; la détermination d'une perte de distillation selon la pseudo-image d'étiquette et la deuxième image ; et l'entraînement du premier modèle de traitement d'image selon la perte de distillation.

7. Procédé selon la revendication 6, dans lequel la détermination de la perte de distillation selon la pseudo-image d'étiquette et la deuxième image comprend :

la détermination d'une perte de perception en fonction d'une image caractéristique lors d'un processus de génération de la pseudo-image d'étiquette par le second modèle de traitement d'image et d'une image caractéristique lors d'un processus de génération de la deuxième image par le premier modèle de traitement d'image ; et la prise de la perte perceptive comme la perte de distillation.

8. Procédé selon la revendication 7, dans lequel la perte perceptive comprend au moins une parmi une perte de reconstruction de caractéristique et une perte de reconstruction de style.

9. Procédé selon la revendication 6, dans lequel le premier modèle de traitement d'image est entraîné sur la base d'étapes, comprenant en outre :

la détermination d'une perte de variation totale en fonction de la deuxième image ; et l'entraînement du premier modèle de traitement d'image en fonction de la perte de distillation comprend l'entraînement du premier modèle de traitement d'image selon la perte de distillation et la perte de variation totale.

10. Procédé selon la revendication 1, dans lequel les images générées par le second modèle de traitement d'image au cours du processus d'entraînement comprennent en outre une première image générée par le second modèle de traitement d'image en fonction d'un échantillon étiqueté parmi les paires de données d'étiquette réelle ; et si le premier modèle de traitement d'image considère la première image en tant qu'informations de supervision, le premier modèle de traitement d'image est entraîné sur la base des étapes comprenant :

l'acquisition d'un échantillon étiqueté correspondant à la première image en tant qu'entrée du premier modèle de traitement d'image ; la génération d'une troisième image en fonction de l'échantillon étiqueté par l'intermédiaire du premier modèle de traitement d'image ; la détermination d'une perte de distillation en fonction de la première et de la troisième image ; et l'entraînement du premier modèle de traitement d'image en fonction de la perte de distillation.

11. Procédé selon la revendication 1, dans lequel le premier modèle de traitement d'image est appliqué à un dispositif terminal léger.

12. Dispositif électronique (800), comprenant :

un ou plusieurs processeurs ; et un appareil de stockage (808), configuré pour stocker un ou plusieurs programmes, caractérisé en ce que lorsque les un ou plusieurs programmes sont exécutés par les un ou plusieurs processeurs, les un ou plusieurs processeurs sont amenés à mettre en œuvre le procédé de traitement d'image selon l'une quelconque des revendications 1-11.

**13.** Support de stockage, comprenant des instructions exécutables par ordinateur, **caractérisé en ce que** les instructions exécutables par ordinateur, lorsqu'elles sont exécutées par un processeur informatique, amènent le processeur informatique à effectuer le procédé de traitement d'image selon l'une quelconque des revendications 1-11.

Acquiring an original image to be processed $\sim$ S110

Inputting the original image into a first image processing model $\sim$ S120

Processing the original image by the first image processing model to generate a target image, in which the first image processing model and a second image processing model are obtained by online alternate training, supervision information during training process of the first image processing model includes at least part of images generated by the second image processing model during training process, and a model scale of the first image processing model is smaller than a model scale of the second image processing model $\sim$ S130

Outputting the target image $\sim$ S140

Fig. 1

Acquiring an unlabeled sample as an input to the second image processing model during a process of the second image processing model and a discriminator performing adversarial training based on the true-label data pairs $\sim$ S210

Generating candidate pseudo-label images according to the unlabeled sample by the second image processing model $\sim$ S220

Screening the candidate pseudo-label images by the discriminator to obtain a final pseudo-label image $\sim$ S230

Fig. 2

Fig. 3

Fig. 4

Fig. 5

Fig. 6

Fig. 7

800

Processing
Apparatus 801

ROM 802

RAM 803

804

I/O Interface 805

Input
Apparatus 806

Output
Apparatus 807

Storage
Apparatus 808

Communication
Apparatus 809

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Online Multi-Granularity Distillation for GAN Compression. **YUXI REN et al.** ARXIV.ORG. CORNELL UNIVERSITY LIBRARY, 16 August 2021